**Europäisches Patentamt**

(19) **European Patent Office**

**Office européen des brevets**

(11) Publication number: **0 002 903**

**B1**

(12) **EUROPEAN PATENT SPECIFICATION**

(45) Date of publication of patent specification: **08.07.81**

(51) Int. Cl.³: **B 62 M 9/10**

(21) Application number: **78300782.6**

(22) Date of filing: **11.12.78**

(54) **A multi-stage gear crank for a cycle.**

(30) Priority: **16.12.77 JP 152238/77**

(43) Date of publication of application:
**11.07.79 Bulletin 79/14**

(45) Publication of the grant of the European patent:
**08.07.81 Bulletin 81/27**

(84) Designated Contracting States:
**BE DE FR GB IT**

(56) References cited:
**FR - A - 1 168 825**
**FR - A - 2 376 021**
**US - A - 3 956 943**

(73) Proprietor: **SHIMANO INDUSTRIAL COMPANY LIMITED**
**77, 3-cho Oimatsu-cho Sakai-shi**
**Osaka (JP)**

(72) Inventor: **Ueno, Tadashi**
**305 Sowa-ryo, 4-2, 3-cho Shinkanaoko-cho**
**Sakai-shi Osaka (JP)**

(74) Representative: **Szczuka, Jan Tymoteusz et al,**
**Cruikshank & Fairweather 19 Royal Exchange**
**Square**
**Glasgow G1 3AE Scotland (GB)**

Courier Press, Leamington Spa, England.

A multi-stage gear crank for a cycle

The invention relates to a multi-stage gear crank for a cycle, more particularly to a multi-stage gear crank which is provided at opposite ends of a crank shaft with a pair of crank arms one of which has a multi-stage sprocket assembly comprising at least one larger diameter sprocket and at least one of smaller diameter sprocket, (hereinafter referred to as larger and smaller diameter gear wheels).

Generally, this kind of gear crank is adapted to alternately carry a drive chain on the larger diameter and smaller diameter gear wheels, a front derailleur being used to displace the chain axially of the multi-stage gear crank to switch the chain from one gear wheel to another, thereby transmitting the driving force produced by pedalling to a rear wheel of the cycle at a predetermined ratio according to which gear wheel the chain is on.

The teeth of each gear wheel of the multi-stage gear crank are conventionally aligned along a centre line in the plane of the gear wheel. The front derailleur is conventionally provided with a chain guide which moves between high speed and low speed positions and with a return spring to return the chain guide to the low speed position from the high speed position. In use the chain guide is shifted towards the high speed position against the force of the return spring so as to switch the chain from the smaller diameter gear wheel to the larger diameter one and the return spring acts to return the chain guide to the low speed position to switch the chain in the reverse direction.

When the return spring returns the chain guide to its low speed position, especially when riding the cycle on an uphill road, the chain is occasionally subject to tension which is increased by the forces on the pedals mounted at the free ends of crank arms. This increased tension can overcome the return spring force, whereby, on occasion, the return spring fails to return the chain guide and change gear. Accordingly, the pedalling force has to be reduced to permit a correct gear change. As a result, the cycle is restricted in its performance especially on uphill roads.

This problem could be overcome by increasing the return spring force. However, not only does the speed-change control become very heavy due to the greater return spring force but also the larger diameter gear wheel and the drive chain are subjected to excessive forces so as to lead to poor durability of the same.

In addition, the drive chain is less readily detached from the teeth of the larger diameter gear wheel when switching therefrom to the smaller diameter gear wheel resulting in a delay in gear changing and hence reduced efficiency due to non-optimum use of the various gears.

It has also previously been proposed to modify the teeth of the gear wheel especially in the case of multi-stage gear wheel assemblies used in rear derailleur gear changers. US-A-3956943 discloses a gear wheel in which the teeth are offset right and left alternately for providing easier engagement with a running chain during gear changing. FR-A-1168825 discloses a gear wheel in which the notches between the teeth are chamfered to facilitate engagement of a chain during gear changing. Also FR-A-2376021 discloses a gear wheel having teeth whose tips extend obliquely with respect to the plane of the gear wheel to facilitate chain shifting between different gear wheels. Even when such proposals are applied to a multi-stage gear crank for a cycle, however, they provide at best only a limited degree of improvement in relation to the abovementioned problems.

It is an object of the invention to provide a multi-stage gear crank capable of reliably changing the cycle speed without increasing the return spring force and modifying the pedalling force even when changing speed by use of the return spring during driving of the bicycle on an up-hill road.

According to the present invention there is provided a multi-stage gear crank for a cycle, comprising a crank shaft, a pair of crank arms mounted at opposite axial ends of said crank shaft, and at least one large diameter gear wheel and at least one smaller diameter gear wheel, said gear wheels being mounted for rotation with one of said crank arms and having a plurality of teeth for meshing with a drive chain, characterised in that said large diameter gear wheel is provided only in the vicinity of upper and lower dead points thereof opposite said crank arms with at least one tooth which has chain detaching means for facilitating displacement of the chain from said larger diameter gear wheel.

In other words, it has now been found that the torque on the crank arm during pedalling reaches a minimum value at the upper and lower dead points of the gear wheel, i.e. both the dead points for a gear crank having a pair of crank arms. According to the invention therefore chain-detaching means for facilitating disengagement of the chain from teeth are positioned in the vicinity of the upper and lower dead points of the larger diameter gear wheel opposite the crank arms, whereby it is not necessary to modify the pedalling action in order to achieve reliable speed-changes and the larger diameter gear wheel and drive chain are not subjected to excessive forces during gear changing and hence do not require any additional strengthening or heavier construction.

Various ways of carrying out the invention are described in detail below with reference to the accompanying drawings, which illustrate only some preferred specific embodiments and in which:

Figure 1 is a partially cut-away front view of a multi-stage gear crank of the invention;

Figure 2 is a partial side view thereof.

Figure 3 is an illustration of the meshing of the drive chain with the multi-stage gear crank; and

Figures 4 to 7 are illustrations of alternative forms of chain detaching means for facilitating disengagement of the drive chain from the teeth of the gear wheels.

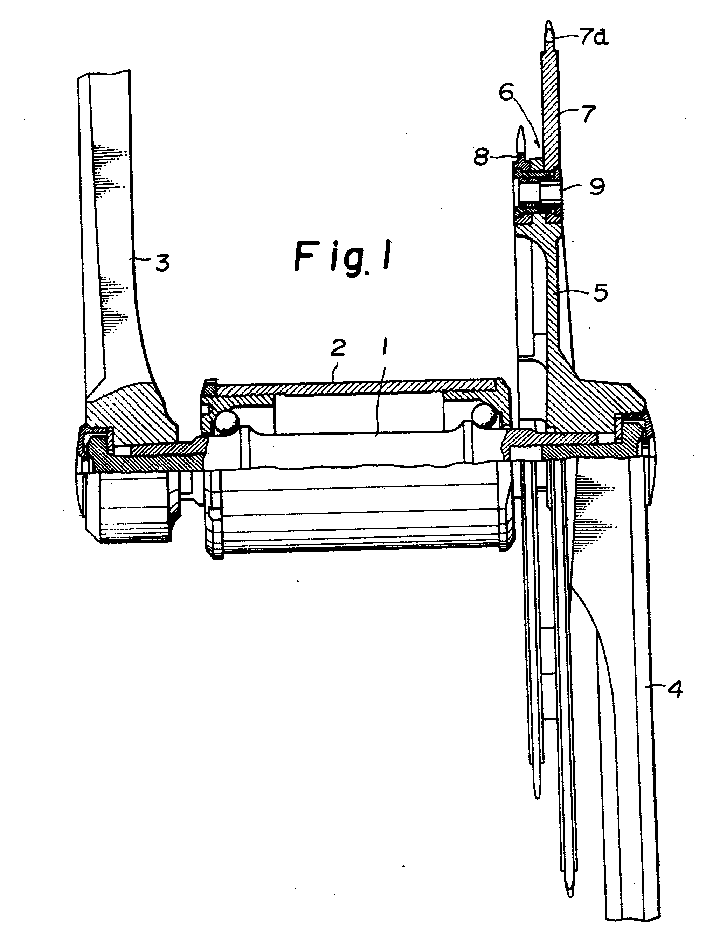

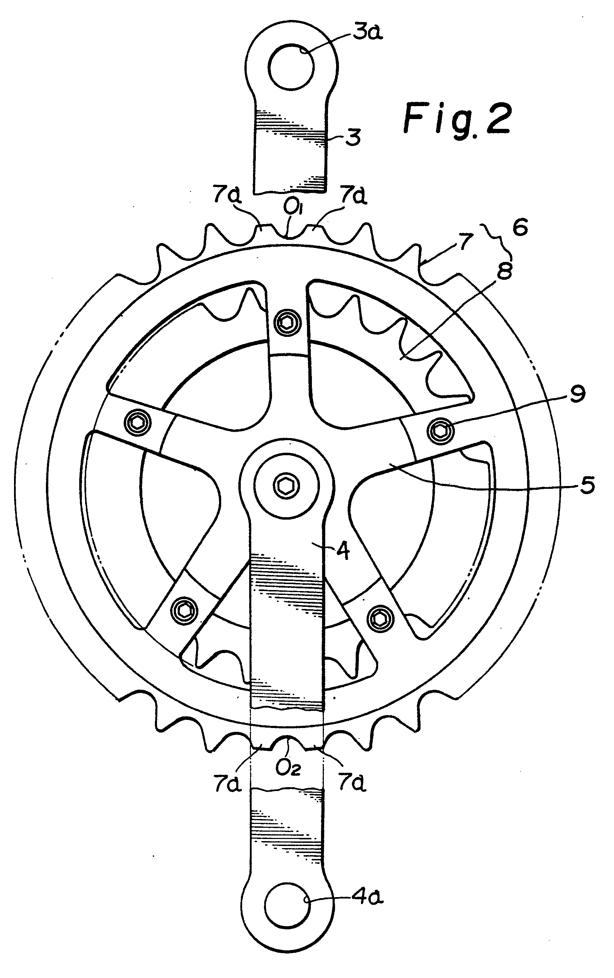

Referring to Figures 1 and 2, there is shown a multi-stage gear crank having a crank shaft 1 supported rotatably by a bracket lug 2 fixed to a bicycle frame (not shown), the crank shaft 1 having at both axial ends thereof a pair of crank arms 3 and 4 at an angular spacing of 180°. The crank arms 3 and 4 have shaft holes 3a and 4a as shown in Figure 2, by means of which shaft holes 3a, 4a pedal means (not shown) may be mounted on the crank arms 3, 4. Arms 5 are provided at one crank arm 4 extending radially of the boss thereof to support multi-stage gear assembly 6. The multi-stage gear assembly 6 comprises a larger diameter gear wheel 7 and a smaller diameter gear wheel 8, the gear wheels 7 and 8 being mounted on the arms 5 connected to each other axially at a regular spacing therebetween by means of a plurality of connectors 9.

Further details of the mounting of the gear wheels are well-known and need not be defined here any further.

In use of the gear crank, a drive chain 10 extends across the larger diameter gear wheel 7 or smaller diameter gear wheel 8 and one of rear gear wheels of the bicycle (not shown) and is shifted axially of the gear wheels 7 and 8 by means of a front derailleur (not shown) which is mounted radially outwardly of the larger diameter gear wheel 7, whereby the chain 10 may be switched from one to the other of the gear wheels 7 and 8. Thus, the driving force produced by pedalling is transmitted to the rear wheel of the bicycle at a predetermined gear ratio.

The multi-stage gear crank according to the invention is provided with chain-detaching means for facilitating disengagement of the chain from the gear teeth of the larger diameter gear wheel 7. The chain-detaching means are in the form of at least one tooth 7a in the vicinity of the upper dead point $O_1$ and of the lower dead point $O_2$ of the larger diameter gear wheel 7, the dead points $O_1$ and $O_2$ being opposite respective ones of the pair of crank arms 3 and 4. Thus disengagement of the chain 10, when it ·is switched from the larger diameter gear wheel 7 to the smaller diameter gear wheel 8, is facilitated in the vicinity of the upper or lower dead point $O_1$ or $O_2$.

In Figure 2, the upper dead point $O_1$ is the top of the larger diameter gear wheel 7 opposite to the remote crank arm 3 extending upwardly from the crank shaft 1 when the pair of crank arms 3 and 4 are disposed vertically and the lower dead point $O_2$ is at the bottom of the larger diameter gear wheel 7 opposite the adjacent crank arm 4 which extends downwardly from the crank shaft 2. If the gear crank is rotated through half a revolution the lower dead point $O_2$ will be opposite the remote crank arm 3 and the upper dead point $O_1$ opposite the adjacent crank arm 4.

The number of teeth provided with chain detaching means may be varied according to various factors such as their relative dimensions and those of the chain but preferably is two or three.

The chain detaching means 7a for facilitating the disengagement of the chain 10 from the gear teeth may have various constructions as shown in Figures 2 and 4 to 7. Any one of these detaching means may be used as well as other different constructions and/or combinations of different types of such constructions.

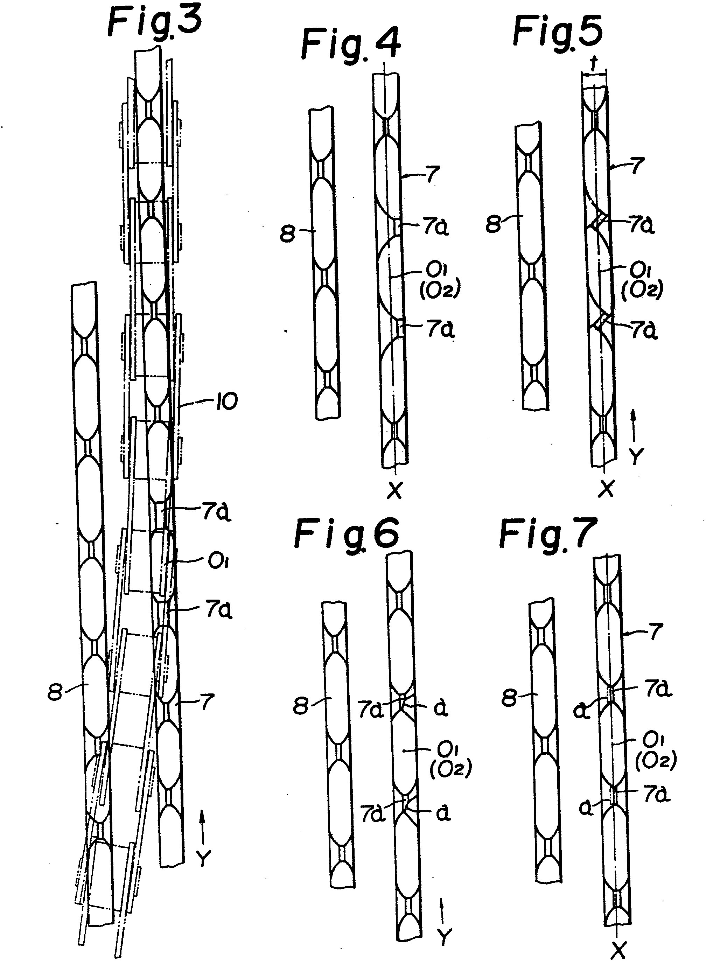

The construction of the chain detaching means is based on the requirements that when the derailleur moves the chain 10 axially of the gear wheel for changing speed, the chain 10 should ride over the teeth 7a of the larger diameter gear wheel 7 so as to be displaced from the gear wheel 7 by being thrust axially thereof, the chain should be easily movable axially with respect to the teeth 7a so as to ride over them, and the chain should easily adopt a path extending obliquely with respect to the gear wheels 7, 8 as shown in Figure 3 when it is shifted towards the smaller diameter gear wheel 8.

Specific types of chain detaching means 7a having various particularly advantageous features will now be described. In one embodiment the teeth 7a are formed so that the chain may readily ride over and come off the teeth by means of the tips of the teeth 7a in the vicinity of the upper dead point $O_1$ and lower dead point $O_2$ being cut down to a reduced level as shown in Figure 2. In this instance, the teeth 7a may be cut out from the bottom thereof respectively. Also the chain 10, when lifted by the chain guide (not shown) radially outwardly of the larger diameter gear wheel 7 in order to ride over the teeth 7a and then to engage therewith is prevented from meshing with the teeth 7a. A second embodiment shown in Figure 4 has the teeth 7a displaced from a centre line X in the plane of the larger gear wheel 7 towards one side thereof remote from the smaller diameter gear wheel 8. The chain 10 may also be constructed so as to easily move axially of the gear wheels 7, 8 and to readily follow a path extending obliquely with respect to the gear wheels 7, 8 so as to readily ride over the teeth 7a. In one type of embodiment facilitating this, as shown in Figure 5, the teeth 7a extend obliquely from the smaller diameter gear wheel 8 in the forward direction of rotation

*Y* of the gear wheels 7, 8 in forward running of the bicycle. In a further example the teeth 7*a* are chamfered *a* at the outer side remote from the smaller diameter gear wheel 8 and at their rear portions with respect to the forward direction of rotation *Y* of the gear wheels 7, 8 as shown in Figure 6. In yet another embodiment, the tips of the teeth 7*a* are chamfered *a* at their sides adjacent the smaller gear wheel 8 as shown in Figure 7.

In the multi-stage gear crank of the invention the front derailleur (not shown) is operated so as to switch the chain from the larger diameter gear wheel 7 to the smaller diameter gear wheel 8 by means of the return spring (not shown) when the teeth 7*a* of the larger diameter gear wheel 7 reach the upper dead point $0_1$ thereof.

Referring to Figure 3, the chain guide is shifted to the low speed position, so that the chain in mesh with the larger diameter gear wheel 7 remains thereon at a forward portion in the forward direction *Y* of rotation of the multi-stage gear assembly 6 and shifts radially outwardly of the smaller diameter gear wheel 8 at a portion adjacent the derailleur to adopt an oblique pathway as shown in the drawing.

At this stage, when the crank arms 3 and 4 turn to position the point of engagement of the chain 10 with the larger gear wheel 7 at the teeth 7*a* of the upper dead point $0_1$ on the larger diameter gear wheel 7, the chain 10 can quickly come off the teeth 7*a*.

When switching the chain at the upper dead point, the torque produced by pedalling reaches a minimum value whereby even when the bicycle is running on an up-hill road the conventional return spring can reliably change the bicycle speed.

As may be clearly understood from the above description, the multi-stage gear crank of the invention enables the chain to be switched from the larger gear wheel to the smaller gear wheel when the torque produced by pedalling is at a minimum, whereby the bicycle speed can reliably be changed during running on an up-hill road without the need for increasing the return spring force and modifying pedalling strength. Hence, less force is enough to change the bicycle speed and also the larger diameter gear wheel and drive chain are not subjected to excessive forces when changing speed thereby permitting long life of the parts.

Furthermore, there is no need for the pedalling force to be reduced when changing speed while the bicycle is running on an up-hill road. Thus the bicycle is not restricted in the obtaining of maximum efficiency therefrom.

## Claims

1. A multi-stage gear crank for a cycle, comprising a crank shaft (1), a pair of crank arms (3, 4) mounted at opposite axial ends of said crank shaft (1), and at least one larger diameter gear wheel (7) and at least one smaller diameter gear wheel (8), said gear wheels (7, 8) being mounted for rotation with one of said crank arms (4) and having a plurality of teeth for meshing with a drive chain (10), characterised in that said larger diameter gear wheel (7) is provided only in the vicinity of upper and lower dead points (01, 02) thereof opposite said crank arms (3, 4) with at least one tooth (7*a*) which has chain detaching means for facilitating displacement of the chain (10) from said larger diameter gear wheel (7).

2. A multi-stage gear crank as claimed in Claim 1, wherein each said at least one tooth (7*a*) having chain detaching means is in the form of a tooth (7*a*) which is smaller in height than the other teeth of said gear wheel (7).

3. A multi-stage gear crank as claimed in Claim 1, wherein each said at least one tooth (7*a*) having chain detaching means is in the form of a tooth (7*a*) which tooth is displaced from a centre line (X) in the plane of said larger diameter gear wheel (7) to one side of said larger diameter gear wheel (7) remote from said smaller diameter gear wheel (8).

4. A multi-stage gear crank as claimed in Claim 1, wherein each said at least one tooth (7*a*) having chain detaching means is in the form a tooth (7*a*) disposed obliquely with respect to a centre line (X) in the plane of said larger diameter gear wheel (7), each of said tooth diverging away from said smaller diameter gear wheel (8) in the forward direction of rotation (Y) of said larger diameter gear wheel (7).

5. A multi-stage gear crank as claimed in Claim 1, wherein each said at least one tooth (7*a*) having chain detaching means is in the form of a tooth (7*a*) which is chamfered (*a*) on its outer side remote from said smaller diameter gear wheel (8) at its rearward and with respect to the forward direction of rotation (Y) of said larger diameter gear wheel (7).

6. A multi-stage gear crank as claimed in Claim 1, wherein each said at least one tooth (7*a*) having chain detaching means is in the form of a tooth (7*a*) which is chamfered (*a*) at one side parallel to a centre line (X) in the plane of said larger diameter gear wheel (7), whereby it has a smaller thickness than the other teeth of said larger diameter gear wheel (7).

7. A multi-stage gear crank as claimed in Claim 6, wherein said teeth (7*a*) are chamfered (*a*) on the side of the larger diameter gear wheel (7) adjacent said smaller diameter gear wheel (8).

## Revendications

1. Une manivelle à engrenages à plusieurs étapes pour cycle, comprenant un arbre-manivelle (1), deux bras de manivelle (3, 4) montés sur les extrémités axiales opposées de l'arbre-manivelle (1) mentionné, et au moins une roue d'engrenage de diamètre plus large (7) et au moins une roue d'engrenage de diamètre plus petit (8), les roues d'engrenage (7, 8) mentionnées étant montées pour tourner avec un desdits bras de manivelle (4) et cumulant des dents pour s'engrener avec une chaîne de transmission (10), caractérisée par le fait que la roue d'engrenage (7) de plus grand diamètre mentionnée est fournie uniquement dans le voisinage des points morts supérieur et inférieur de la manivelle (01, 02) à l'opposé des bras de manivelle (3, 4) mentionnés avec au moins une dent (7a) ayant des moyens détachement de chaîne pour faciliter le déplacement de la chaîne (10) à partir de ladite roue d'engrenage de plus large diamètre (7).

2. Une manivelle à engrenages à plusieurs étapes comme revendiquée au No. 1 ci-dessus, dans laquelle au moins une des dents (7a) mentionnées ayant des moyens de détachement de chaîne, a la forme d'une dent (7a) qui est plus petite en hauteur que les autres dents de la roue d'engrenage (7) mentionnée.

3. Une manivelle à engrenages à plusieurs étapes comme revendiquée au No. 1 ci-dessus, dans laquelle au moins une dent (7a) mentionnée ayant des moyens de détachement de chaîne a la forme d'une dent (7a); celle-ci est décalée d'une ligne centrale (X) dans le plan de la roue d'engrenage de plus large diamètre mentionné (7) vers un côté de la roue d'engrenage de plus large diamètre (7) mentionnée loin de la roue d'engrenage de plus petit diamètre mentionné (8).

4. Une manivelle à engrenages à plusieurs étapes comme revendiquée au No. 1 ci-dessus, dans laquelle au moins une dent (7a) mentionnée ayant des moyens de détachement de chaîne a la forme d'une dent (7a) disposée obliquement par rapport à une ligne centrale (X) dans le plan de la roue d'engrenage de diamètre plus large mentionné (7), chaque dent mentionnée s'écartant de al roue d'engrenage de plus petit diamètre (8) dans le sens avent de la rotation (Y) de la roue d'l'engrenage de plus large diamètre (7) mentionnée.

5. Une manivelle à engrenages à plusieurs étapes comme revendiquée au No. 1 ci-dessus, dans laquelle au moins une dent mentionnée (7a) ayant des moyens de détachement de chaîne a la forme d'une dent, (7a), chanfreinée (a) sur son côté extérieur loin de la roue d'engrenage de plus petit diamètre (8) à son extrémité arrière par rapport au sens avant de la rotation (Y) de la roue d'engrenage de plus large diamètre mentionné (7).

6. Une manivelle à engrenages à plusieurs étapes comme revendiquée au No. 1 ci-dessus, dans laquelle au moins une dent mentionnée (7a) ayant des moyens de détachement de chaîne a la forme d'une dent, (7a) chanfreinée (a) à un côté parallèle à une ligne central (X) dans le plan de la roue d'engrenage de plus large diamètre mentionnée (7) d'où elle est un peu plus épaisse que les autres dents de la roue d'engrenage de plus large diamètre (7).

7. Une manivelle à engrenages à plusieurs étapes comme revendiquée au No. 6 ci-dessus, dans laquelle les dents mentionnées (7a) sont chanfreinées (a) sur le côté de la roue d'engrenage de plus large diamètre (7) adjacent à la roue d'engrenage de plus petit diamètre (8).

**Patentansprüche**

1. Eine mehrstufige Gangschaltung für ein Rad bestehend aus einer Kurbelwelle (1), einem Paar Kurbelarmen (3, 4), die an den entgegengesetzten Achsenenden der besagten Kurbelwelle (1) angebracht sind, und wenigstens einem Zahnrad (7) mit größerem Durchmesser und wenigstens einem Zahnrad (8) mit kleinerem Durchmesser, wobei die besagten Zahnräder (7, 8) zur Drehung mit einem der besagten Kurbelarme (4) angebracht sind und eine Vielzahl von Zähnen zur Verzahnung mit einer Antriebskette (10) haben, die dadurch gekennzeichnet ist, daß das besagte Zahnrad (7) mit größerem Durchmesser nur im Bereich seiner oberen und unteren Totpunkte (01, 02) gegenüber besagten Kurbelarmen (3, 4) mit wenigstens einem Zahn (7a) versehen ist, der Mittel zur Ablösung der Kette hat, um so die Verlagerung der Kette (10) von besagtem Zahnrad (7) mit größerem Durchmesser zu erleichtern.

2. Eine mehrstufige Gangschaltung nach Anspruch 1, wobei jeder der besagten Zähne (7a) mit Mitteln zum Ablösen der Kette, von denen mindestens einer vorhanden ist, die Form eines Zahnes (7a) hat, der eine geringere Höhe als die anderen Zähne des besagten Zahnrades (7) hat.

3. Eine mehrstufige Gangschaltung nach Anspruch 1, wobei jeder der besagten Zähne (7a) mit Mitteln zum Ablösen der Kette, von denen mindestens einer vorhanden ist, die Form eines Zahnes (7a) hat, der von der Mittellinie (X) in der Ebene besagten Zahnrades (7) mit größerem Durchmesser zu der einen Seite des besagten Zahnrades (7) mit größerem Durchmesser und entfernt von besagtem Zahnrad (8) mit kleinerem Durchmesser versetzt ist.

4. Eine mehrstufige Gangschaltung nach Anspruch 1, wobei jeder der besagten Zähne (7a) mit Mitteln zum Ablösen der Kette, von denen mindestens einer vorhanden ist, die Form eines Zahnes (7a) hat, der bezüglich der Mittellinie (X) in der Ebene des besagten Zahnrades (7) mit größerem Durchmesser schräg versetzt ist, wobei jeder der besagten Zähne von besagtem Zahnrad (8) mit kleinerem Durchmesser in der Richtung der Vorwärtsdrehung (Y) des besagten Zahnrades (7) mit größerem Durchmesser fortstrebt.

5. Eine mehrstufige Gangschaltung nach Anspruch 1, wobei jeder der besagten Zähne (7a) mit Mitteln zum Ablösen der Kette, von denen mindestens einer vorhanden ist, die Form eines Zahnes (7a) hat, der hinsichtlich der Richtung der Vorwärtsdrehung (Y) des besagten Zahnrades (7) mit größerem Durchmesser an seinem

**0 002 903**

rückwärtigen Ende und an der von besagtem Zahnrad (8) mit kleinerem Durchmesser entfernteren Außenseite abgerundet ist.

6. Eine mehrstufige Gangschaltung nach Anspruch 1, wobei jeder der besagten Zähne (7a) mit Mitteln zum Ablösen der Kette, von denen mindestens einer vorhanden ist, die Form eines Zahnes (7a) hat, der auf der einen Seite parallel zu einer Mittellinie (X) in der Ebene des besagten Zahnrades (7) mit größerem Durchmesser abgerundet (a) ist, wobei er dünner ist als die anderen Zähne des besagten Zahnrades (7) mit größerem Durchmesser.

7. Eine mehrstufige Gangschaltung nach Anspruch 6, wobei jeder der besagten Zähne (7a) auf der Seite des Zahnrades (7) mit dem größeren Durchmesser und nahe dem besagten Zahnrad (8) mit dem kleineren Durchmesser abgerundet (a) ist.

Fig. 1

Fig.2

# Fig. 3

# Fig. 4

# Fig. 5

# Fig. 6

# Fig. 7